# EUROPÄISCHE PATENTSCHRIFT

(11) **EP 2 656 122 B1**
(45) Veröffentlichungstag und Bekanntmachung des Hinweises auf die Patenterteilung: **25.08.2021**
(21) Anmeldenummer: 11805504.5
(22) Anmeldetag: 22.12.2011
(51) Int. Cl.: G02B 5/30, G02B 27/01, G02F 1/1335

(54) **HEAD-UP-DISPLAY FÜR EIN KRAFTFAHRZEUG**
HEAD-UP DISPLAY FOR A MOTOR VEHICLE
AFFICHAGE TÊTE HAUTE POUR UN VÉHICULE AUTOMOBILE

(30) Priorität: 23.12.2010 DE 102010055839; 16.03.2011 DE 102011014145
(43) Veröffentlichungstag der Anmeldung: 30.10.2013
(60) Teilanmeldung: 21179130.6
(73) Patentinhaber: Continental Automotive GmbH, 30165 Hannover (DE)
(72) Erfinder: FINGER, Eckhard, 63739 Aschaffenburg (DE)
(74) Vertreter: Continental Corporation
(86) Internationale Anmeldenummer: PCT/EP2011/073732
(87) Internationale Veröffentlichungsnummer: WO 2012/085175

(56) Entgegenhaltungen:
- EP-A2- 1 126 292
- US-A1- 2004 008 412
- US-A1- 2004 135 742
- US-A1- 2005 162 738
- US-A1- 2007 146 638

## Beschreibung

Die Erfindung bezieht sich auf ein Head-up-Display für ein Kraftfahrzeug, mit einer Bilderzeugungseinrichtung, von der Strahlenbündel eines Bildes durch einen lichtausgangsseitig auf der Bilderzeugungseinrichtung angeordneten Polarisator linear polarisiert über eine Abbildungsoptik zu einer Windschutzscheibe geleitet und von der Windschutzscheibe in Richtung eines Fahrers des Kraftfahrzeugs gelenkt werden.

Bei einem derartigen Head-up-Display wird eine Darstellung von Informationen dem Fahrer des Kraftfahrzeugs von einem Projektionssystem in die Windschutzscheibe eingespiegelt.

Das Bild wird dabei von der Bilderzeugungseinrichtung erzeugt. Zum Betrachter abschließend befindet sich auf der Bilderzeugungseinrichtung eine absorbierende Polarisationsfolie. Dadurch ist das Licht der Bilderzeugungseinrichtung linear polarisiert. Diese Polarisierung steht senkrecht zur Ebene der Projektion.

Aufgrund der Lichtwege und der Reflektion des Strahlenbündels des Projektionsbildes an der Windschutzscheibe gibt es die Möglichkeit, daß die Sonne direkt in die Bilderzeugungseinrichtung einstrahlt. Aufgrund der Fokussierung der Abbildungsoptik wird eine erhebliche Wärmemenge in die Bilderzeugungseinrichtung eingebracht.

Um dies zu mindern ist es bekannt einen Kaltlichtspiegel in dem Strahlengang des Strahlenbündels zwischen Bilderzeugungseinrichtung und Windschutzscheibe anzuordnen, der im infraroten Spektralbereich transparent oder absorbierend ist. Trotzdem kann noch eine solche Lichtleistung auf die Bilderzeugungseinrichtung einstrahlen, daß diese auf Temperaturen erwärmt wird, die das erzeugte Bild stören.

Die US 2005 0162738 A1 beschreibt ein Head-up Display mit einem von Leds beleuchteten Flüssigkristalldisplay. Die EP 1 126 292 A2 beschreibt einen reflektiven Polarisator, bei dem zur Vermeidung von Störlicht ein dichroider Polarisator zusätzliche Verwendung findet. Die US 2007 0146638 A1 beschreibt einen Farbprojektor zur Verwendung in verschiedensten Anzeigesystemen, bei dem Lichtstrahlen verschiedenfarbiger Bildquellen zu einem einzigen Bild zusammengeführt werden.

Aufgabe der Erfindung ist es daher ein Head-up-Display der eingangs genannten Art zu schaffen, das eine Sonneneinstrahlung in die Bilderzeugungseinrichtung wesentlich reduziert.

Diese Aufgabe wird erfindungsgemäß in einer ersten Ausführungsform durch ein Head-up Display mit den Merkmalen des Anspruchs 1 gelöst.

Durch den reflektierenden Linear-Polarisator wird von dem von der Sonne durch die Windschutzscheibe in den Strahlengang zwischen Windschutzscheibe und Bilderzeugungseinrichtung eingestrahlten Licht der nicht der Polarisationsrichtung des reflektierenden Polarisators entsprechenden Polarisationsrichtung reflektiert und kann nicht zu einer Erwärmung der Bilderzeugungseinrichtung führen.

Der reflektierende Polarisator kann an jeder Stelle im Strahlengang zwischen der Bilderzeugungseinrichtung und der Windschutzscheibe angeordnet sein.

In einer anderen vorteilhaften Ausbildung kann der reflektierende Polarisator auf dem lichtausgangsseitigen Polarisator der Bilderzeugungseinrichtung angeordnet sein.

Dabei ist keine separate Montage des reflektierenden Polarisators erforderlich, wenn der reflektierende Polarisator und der lichtausgangsseitige Polarisator der Bilderzeugungseinrichtung in einer gemeinsamen Folie ausgebildet sind.

In einer weiteren Ausbildungsform kann im Strahlengang des Strahlenbündels zwischen der Bilderzeugungseinrichtung und der Windschutzscheibe ein reflektierender Linear-Polarisator angeordnet sein, dessen Polarisationsrichtung zur Polarisationsrichtung des von der Bilderzeugungseinrichtung ausgestrahlten Strahlenbündels senkrecht ausgerichtet ist und dieses Licht reflektiert und der auf dem Strahlengang von der Windschutzscheibe zur Bilderzeugungseinrichtung strahlendes Licht anderer Polarisation absorbiert oder transmittiert.

Das von der Bilderzeugungseinrichtung ausgehende Lichtbündel wird von dem reflektierenden Polarisator weiter zur Windschutzscheibe und von dort in Richtung des Fahrers gelenkt. Von dem in dem Strahlengang von der Windschutzscheibe zur Bilderzeugungseinrichtung strahlenden Sonnenlicht wird von dem reflektierenden Polarisator ein Teil reflektiert und nur ein weiterer Teil transmittiert, so daß nur der transmittierte Teil zur Bilderzeugungseinrichtung gelangen und zu deren Aufheizung führen kann.

Zum Schutz gegen äußere Einflüsse sind in der weiteren Ausführungsform der Erfindung die Bilderzeugungseinrichtung und die Abbildungsoptik innerhalb einer Hutze angeordnet, die eine von einer lichtdurchlässigen Abdeckscheibe verschlossene Öffnung aufweist, durch die das Strahlenbündel der Bilderzeugungseinrichtung zur Windschutzscheibe gelangt.

Dabei ist erfindungsgemäß der reflektierende Polarisator auf oder in der Abdeckscheibe angeordnet.

Dabei ist montagevereinfachend keine separate Montage von Abdeckscheibe und reflektierendem Polarisator erforderlich.

Diese Ausbildung führt auch zu hohen Transmissionswerten und damit zu einem Head-up-Display großer Leistungsfähigkeit.

Prinzipiell ist bei der Anordnung des reflektierenden Polarisators an der Bilderzeugungseinrichtung ein weiterer s-polarisierender Polarisator lichtausgangsseitig auf der Bilderzeugungseinrichtung nicht erforderlich.

Durch die weniger optimale Polarisationswirkung von reflektierenden Polarisatoren, die bei ihrer alleinigen lichtausgangsseitigen Anordnung auf der Bilderzeugungseinrichtung zu einem niedrigeren Kontrast der Darstellung führen würde, sind vorzugsweise sowohl ein reiner linear absorbierender Polarisator als auch ein reflektierender Polarisator lichtausgangsseitig auf der Bilderzeugungseinrichtung angeordnet.

Ist die Bilderzeugungseinrichtung eine Flüssigkristallanzeige, die von einer Lichtquelle durchleuchtbar ist und lichteingangsseitig einen polarisierenden Polarisator trägt, so wird ein Klären der Flüssigkristallanzeige, durch die kein Bild mehr dargestellt wird, vermieden.

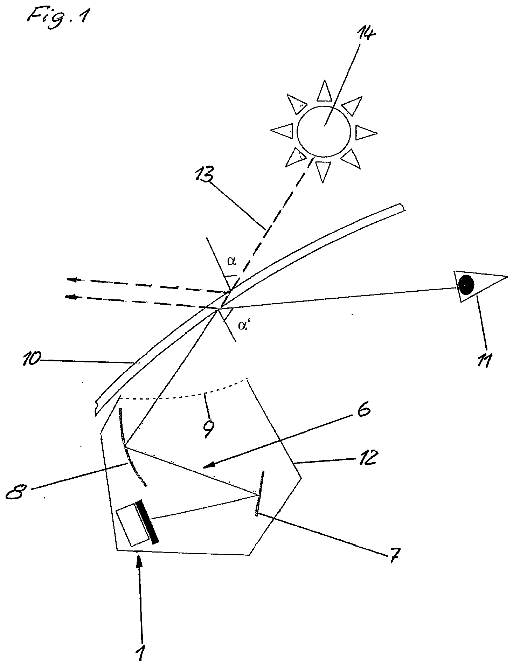

Ein Ausführungsbeispiel der Erfindung ist in der Zeichnung dargestellt und wird im folgenden näher beschrieben. Es zeigen
- Figur 1: eine Prinzipdarstellung eines Head-up-Displays

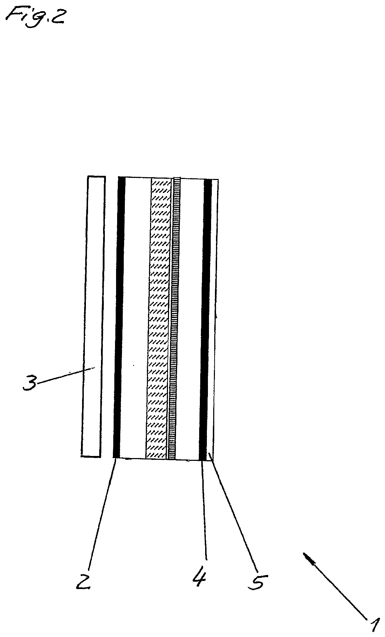

- Figur 2: einen Querschnitt einer Flüssigkristallanzeige des Head-up-Displays nach Figur 1.

Eine Flüssigkristallanzeige 1, die eine TFT-Flüssigkristallanzeige ist, weist auf ihrer Rückseite einen ersten Polarisator 2 auf, durch den das Licht einer Lichtquelle 3 linear polarisiert in die Flüssigkristallanzeige 1 eintritt.

Lichtausgangsseitig ist auf der Flüssigkristallanzeige 1 zunächst ein linearer s-polarisierender zweiter Polarisator 4 und darauf ein reflektierender Linear-Polarisator 5 gleicher Polarisation wie der zweite Polarisator 4 angeordnet.

Das aus der Flüssigkristallanzeige 1 austretende Strahlenbündel eines Bildes besteht also aus s-polarisiertem Licht.

Dieses Strahlenbündel wird in einem Strahlengang 6 über einen Spiegel 7 und einen aspherischen Spiegel 7' aufweisende Abbildungsoptik 8 sowie eine transparente Abdeckscheibe 9 auf eine Windschutzscheibe 10 eines Kraftfahrzeugs geleitet und dieser zu dem Bereich der Augen 11 eines Fahrers des Kraftfahrzeugs gespiegelt.

Die Abdeckscheibe 9 verschließt eine unterhalb der Windschutzscheibe 10 befindliche Hutze 12, in der die Flüssigkristallanzeige 1, die Lichtquelle 3, die Spiegel 7, 7' und die Abbildungsoptik 8 angeordnet sind.

Durch die Neigung der Windschutzscheibe 10 erfolgt die Umlenkung des Strahlenbündels an der Windschutzscheibe 10 um einen Winkel zwischen 110° und 140°.

Dies bedeutet, daß dieser Umlenkwinkel einen Brewster-Winkel α' von etwa 60° entspricht.

Trifft die Strahlung 13 der Sonne 14 von außen unter einem dem Brewster-Winkel α nahen Winkel auf die Windschutzscheibe 10, wird dieses Sonnenlicht durch die Windschutzscheibe 10 zum Teil polarisiert.

Aufgrund des Brewster-Winkels hat das Sonnenlicht nach der Windschutzscheibe 10 einen größeren p-polarisierten Anteil als s-polarisierten Anteil. Dieser p-polarisierte Anteil wird durch den reflektierenden Polarisator 5 besonders gut von der Flüssigkristallanzeige 1 abgehalten und kann somit diese nicht erwärmen.

Der p-polarisierte Anteil beträgt etwa 70%, während der s-polarisierte Anteil nur etwa 30% beträgt.

Da also nur der 30%-ige s-polarisierte Anteil des Sonnenlichts entgegen dem Strahlengang 6 zur Flüssigkristallanzeige 1 gelangen und zu einer Erwärmung der Flüssigkristallanzeige 1 führen kann, ist diese Erwärmung derart gering, daß sie zu keiner Beeinträchtigung der Funktion der Flüssigkristallanzeige 1 führt.

## Patentansprüche

1. Head-up-Display für ein Kraftfahrzeug, mit einer Bilderzeugungseinrichtung (1), einem lichtausgangsseitig auf der Bilderzeugungseinrichtung (1) angeordneten Polarisator (4), einer Abbildungsoptik und einem reflektierenden Linear-Polarisator (5), wobei von der Bilderzeugungseinrichtung (1) Strahlenbündel eines Bildes durch den lichtausgangsseitig auf der Bilderzeugungseinrichtung (1) angeordneten Polarisator (4) linear s-polarisiert über eine Abbildungsoptik zu einer Windschutzscheibe (10) des Kraftfahrzeugs geleitet und von der Windschutzscheibe (10) in Richtung eines Fahrers (11) des Kraftfahrzeugs gelenkt werden, wobei der reflektierende Linear-Polarisator (5) auf dem lichtausgangsseitigen Polarisator (4) der Bilderzeugungseinrichtung (1) und im Strahlengang (6) des Strahlenbündels zwischen lichtausgangsseitigen Polarisator (4) und der Windschutzscheibe (10) angeordnet ist, und wobei die Polarisationsrichtung des reflektierender Linear-Polarisators (5) der Polarisationsrichtung des von der Bilderzeugungseinrichtung (1) ausgestrahlten Strahlenbündels entspricht und wobei der reflektierende Linear-Polarisator (5) auf dem Strahlengang (6) von der Windschutzscheibe (10) zur Bilderzeugungseinrichtung (1) strahlendes Licht anderer Polarisation reflektiert.

2. Head-up-Display nach Anspruch 1, **dadurch gekennzeichnet, daß** der reflektierende Polarisator (5) und der lichtausgangsseitige Polarisator (4) der Bilderzeugungseinrichtung in einer gemeinsamen Folie ausgebildet sind.

3. Head-up-Display nach einem der vorhergehenden Ansprüche, **dadurch gekennzeichnet, daß** die Bilderzeugungseinrichtung eine Flüssigkristallanzeige (1) ist, die von einer Lichtquelle (3) durchleuchtbar ist und lichteingangsseitig einen p-polarisierenden Polarisator (2) trägt.

## Claims

1. Head-up display for a motor vehicle, having an image generating device (1), a polarizer (4) arranged on the image generating device (1) on the light-exit side, an imaging optical unit and a reflective linear polarizer (5), wherein beams of an image are guided, linearly s-polarized by the polarizer (4) arranged on the light-exit side on the image generating device (1), via an imaging optical unit from the image generating device (1) to a windscreen (10) of the motor vehicle, and are directed from the windscreen (10) in the direction of a driver (11) of the motor vehicle, wherein the reflective linear polarizer (5) is arranged on the light-exit-side polarizer (4) of the image generating device (1) and in the beam path (6) of the beam between the light-exit-side polarizer (4) and the windscreen (10), and wherein the polarization direction of the reflective linear polarizer (5) corresponds to the polarization direction of the beam emitted by the image generating device (1) and wherein the reflective linear polarizer (5) reflects light of a different polarization that travels along the beam path (6) from the windscreen (10) to the image generating device.

2. Head-up display according to Claim 1, **characterized in that** the reflective polarizer (5) and the light-exit-side polarizer (4) of the image generating device are formed in a common film.

3. Head-up display according to either of the preceding claims, **characterized in that** the image generating device is a liquid-crystal display (1), through which a light source (3) is able to shine and which, on the light-entry side, carries a p-polarizing polarizer (2).

## Revendications

1. Afficheur tête haute pour un véhicule automobile, comprenant un dispositif générateur d'images (1), un polariseur (4) disposé du côté sortie de lumière sur le dispositif générateur d'images (1), une optique de représentation et un polariseur linéaire réfléchissant (5), des faisceaux de rayons d'une image étant guidés depuis le dispositif générateur d'images (1) vers un pare-brise (10) du véhicule automobile, en polarisation S linéaire par le polariseur (4) disposé du côté sortie de lumière sur le dispositif générateur d'images (1) et par le biais d'une optique de représentation, puis déviés du pare-brise (10) en direction d'un conducteur (11) du véhicule automobile, le polariseur linéaire réfléchissant (5) étant disposé sur le polariseur (4) côté sortie de lumière du dispositif générateur d'images (1) et dans le trajet de rayon (6) du faisceau de rayons entre le polariseur (4) côté sortie de lumière et le pare-brise (10), et la direction de polarisation du polariseur linéaire réfléchissant (5) correspondant à celle du faisceau de rayons irradié par le dispositif générateur d'images (1) et le polariseur linéaire réfléchissant (5) réfléchissant une lumière irradiée ayant une autre polarisation sur le trajet de rayon (6) du pare-brise (10) au dispositif générateur d'images (1).

2. Afficheur tête haute selon la revendication 1, **caractérisé en ce que** le polariseur réfléchissant (5) et le polariseur (4) côté sortie de lumière du dispositif générateur d'images sont réalisés dans un film commun.

3. Afficheur tête haute selon l'une des revendications précédentes, **caractérisé en ce que** le dispositif générateur d'images est un afficheur à cristaux liquides (1) qui peut être transilluminé par une source de lumière (3) et qui comporte un polariseur à polarisation P (2) du côté de l'entrée de la lumière.
